Europäisches Patentamt

European Patent Office

Office européen des brevets

(11) Veröffentlichungsnummer : **0 057 868**
**B1**

# (12) EUROPÄISCHE PATENTSCHRIFT

(45) Veröffentlichungstag der Patentschrift :
15.05.85

(51) Int. Cl.⁴ : **G 21 C 7/22, G 21 C 9/02**

(21) Anmeldenummer : **82100600.4**

(22) Anmeldetag : **28.01.82**

(54) Einrichtung zum Abschalten eines Hochtemperatur-Kernreaktors.

(30) Priorität : **09.02.81 DE 3104481**

(43) Veröffentlichungstag der Anmeldung :
**18.08.82 Patentblatt 82/33**

(45) Bekanntmachung des Hinweises auf die Patenterteilung : **15.05.85 Patentblatt 85/20**

(84) Benannte Vertragsstaaten :
**AT BE CH DE FR GB IT LI LU NL SE**

(56) Entgegenhaltungen :
**DD-A- 43 569**
**DE-B- 1 214 803**
**DE-B- 1 282 046**
**DE-B- 1 542 165**
**DE-C- 2 325 828**

(73) Patentinhaber : **GHT Gesellschaft für Hochtemperaturreaktor-Technik mbH**
**Friedrich-Ebert-Strasse**
**D-5060 Bergisch-Gladbach 1 (DE)**

(72) Erfinder : **Ullrich, Manfred**
**Kippekausen 115**
**D-5060 Bergisch-Gladbach 3 (DE)**
Erfinder : **Schepers, Hubert**
**Gerberlohe 8**
**D-5060 Bergisch Gladbach 1 (DE)**
Erfinder : **Reutler, Herbert, Dr.**
**Weissenburgstrasse 33**
**D-5000 Köln 1 (DE)**

(74) Vertreter : **Mehl, Ernst, Dipl.-Ing. et al**
**Postfach 22 01 76**
**D-8000 München 22 (DE)**

## Beschreibung

Die vorliegende Erfindung betrifft eine Einrichtung nach dem Oberbegriff des ersten Anspruchs. Bei dem zur Zeit im Bau befindlichen Thorium-Hochtemperaturreaktor (THTR) in Uentrop geschieht die Regelung und gegebenenfalls Abschaltung des Reaktors unter anderem durch Stäbe, die in im Reflektor angelegten Kanälen auf- und abgefahren werden können und die für Zwecke der Schnellabschaltung, auch von ihren Halterungen gelöst, allein unter dem Einfluß der Schwerkraft in diese Kanäle hineinfallen. Da der Reflektor üblicherweise aus einer Vielzahl von einzelnen Graphitblöcken aufgebaut ist und sich Änderungen der Form und Abmessungen dieser Blöcke während des Betriebes (z. B. durch neutroneninduziertes Schwellen) nicht völlig ausschließen lassen, ist eine Behinderung der Bewegung der Regelstäbe durch Versatz der einzelnen Abschnitte des Kanals in verschiedenen Blöcken zueinander denkbar. In der DE-C-23 25 828 ist vorgeschlagen worden, kleine Kugeln aus einem neutronenabsorbierenden Material in Behältern oberhalb der Spaltzone zu lagern und bei Versagen der oben beschriebenen ersten Abschaltung in die Schüttung der kugelförmigen Brennelemente hineinrieseln zu lassen. Aufgabe der Erfindung ist eine Einrichtung der beschriebenen Art, bei der das Einbringen von neutronenabsorbierendem Material in zu diesem Zweck angelegten Kanälen im Seitenreflektor des Reaktors durch geringere Verbiegungen dieser Kanäle nicht beeinträchtigt werden kann und die darüberhinaus geeignet ist, ein bei allen Kernreaktoren bestehendes und bislang nur durch die Anordnung komplizierter Sicherheitsschaltungen zu bewältigendes Problem zu lösen :

Es muß sichergestellt sein, daß z. B. beim Anfahren des Reaktors nur jeweils der gewünschte Absorberstab (oder eine bestimmte Gruppe von Stäben) aus ihrer Abschaltstellung herausgefahren wird, und nicht etwa versehentlich auch noch weitere Stäbe.

Zur Lösung dieser Aufgabe dienen die im kennzeichenden Teil des Anspruchs 1 angeführten Merkmale. Wenn zum Beispiel das neutronenabsorbierende Material die Gestalt kleiner Kugeln hat (Etwa von der weiter oben erwähnten Art), so ist gewährleistet, daß auch leicht deformierte Kanäle im gesamten gewünschten Bereich gefüllt werden, da die Kanäle bereits aus anderen Gründen einen gegenüber den Kugeln sehr viel größeren Querschnitt aufweisen. Die Kugeln rieseln einfach unter dem Einfluß der Schwerkraft aus ihren oberhalb der Spaltzone angeordneten Vorratsbehältern, d. h. mit der größtmöglichen Sicherheit und unter Verwendung einfachster Bauteile. Die Kugeln werden bei Bedarf aus ihren Kanälen wieder entfernt, indem sie über Förderrohre nach oben hinausgeschwemmt oder vorzugsweise — geblasen werden. Durch Begrenzung der Leistung des zur Fluidförderung benutzten Gebläses ist sichergestellt, daß nur jeweils einer der Kanäle zu gleicher Zeit geleert werden kann ; sollte das Gebläse infolge eines Schaltfehlers auf zwei oder mehr Kanäle gleichzeitig geschaltet sein, erreicht die sich dann auf ein Mehraches des beabsichtigten Querschnittes verteilende Fluidströmung nicht die Geschwindigkeit, die notwendig wäre, um die Kugeln aus den Kanälen zu entfernen.

Bei Vorhandensein der Möglichkeit oder (etwa aus Symmetriegründen) des Bedarfs, zwei oder mehr Kanäle gleichzeitig zu entleeren, kann das Gebläse im Rahmen dieser Erfindung so bemessen sein, daß die Fluidströmung ausreicht, um die zulässige Anzahl von Kanälen, nicht jedoch mehr gleichzeitig zu leeren. Von dieser Möglichkeit wird im Zusammenhang mit der in Anspruch 2 definierten Ausführungsform Gebrauch gemacht. Bei den herkömmlichen Abschaltstäben begrenzen die Abmessungen der Stabantriebe die Anzahl der auf dem Behälterumfang anzuordnenden Stäbe, wodurch örtliche Unstetigkeiten in der Absorberwirkung schlechter auszugleichen sind. Bei der hier vorgeschlagenen Einrichtung können die Absorberkugeln aus jedem Vorratsbehälter auf eine Mehrzahl von kleineren Kanälen verteilt werden, die auch nur gemeinsam geleert werden, so daß die Absorberwirkung vergleichmäßigt wird.

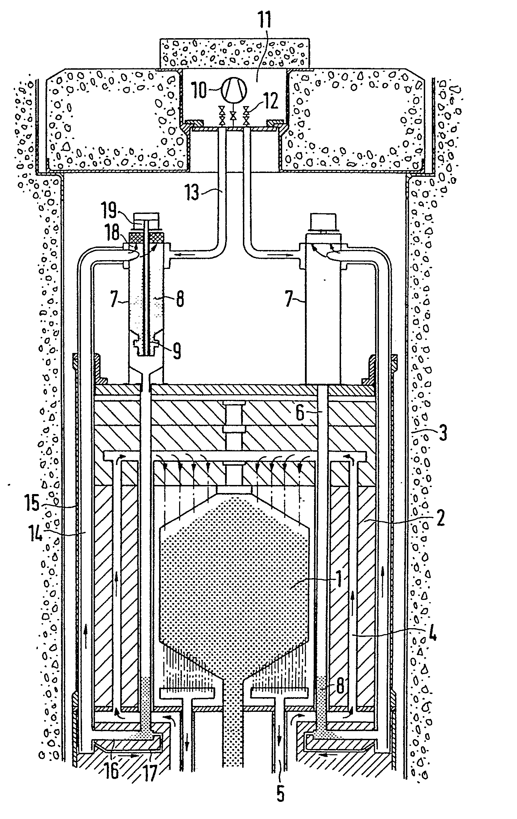

Ein Ausführungsbeispiel der Erfindung ist in der Zeichnung dargestellt, und zwar in Form eines Axiallängsschnittes durch den von der vorliegenden Erfindung betroffenen Teil eines Hochtemperatur-Kernreaktors.

Der Reaktor weist eine aus zahlreichen kugelförmigen Brennelementen bestehende Spaltzone 1 auf ; auf die Darstellung der Einrichtung zum Zu- und Abführen der Brennelemente wird hier verzichtet, da sie nicht erfindungswesentlich sind. Die Spaltzone befindet sich innerhalb einer Kaverne, die in einen Reflektor 2 angelegt ist. Der gesamte Reaktor ist in einem Druckbehälter 3 eingeschlossen. Gekühlt wird die Spaltzone 1 durch Helium, das mittels hier nicht dargestellter Gebläse in Umlauf versetzt in Kanälen 4 aufsteigt, entsprechend der Pfeilrichtung am oberen Ende des Reflektors umgelenkt und von oben in die Kaverne eingeblasen wird. Durch Öffnungen im Kavernenboden gelangt das aufgeheizte Gas in Sammelleitungen 5, durch die es hier ebenfalls nicht dargestellten wärmeverbrauchenden Teile der Anlage zugeführt wird. In unmittelbarer Nachbarschaft der Spaltzone 1 sind im Reflektor 2 weitere Kanäle 6 angelegt, die von oben ganz oder teilweise mit rieselfähigem neutroneneabsorbierendem Material, etwa in Gestalt von Kugeln 8 aus Borkabid von etwa 1 cm Durchmesser gefüllt werden können. Während des Normalbetriebes befinden sich die Kugeln 8 in Vorratsbehältern 7, die oberhalb der weiteren Kanäle 5 und somit auch oberhalb der Spaltzone 1 angeordnet sind. Die Behälter 7 sind an ihrem unteren Ende mit einem der bekannten Stauverschlüsse 9 versehen, d. h. mit einer Wanne, die bei entsprechender Stellung zur Öffnung des Behälters 7 diese durch den Rückstau der in ihr lagernden Kugeln 8 verschließt. Wird diese Wanne gesenkt, bzw. fällt sie im Abschaltfalle von einem dann stromlos werdenden Elektromagneten ab (eine dem Fachmann geläufige Art der Auslösung von Absorberstäben) so wird die Öffnung der Vorratsbehälter 7 freigegeben und die Absorberkugeln 8 können in die weiteren Kanäle 6 rieseln. Sollen die Absorberkugeln 8 aus den Kanälen 6 entfernt werden, so beim Anfahren des Reaktors, wird ein hier nur schematisch angedeutetes Gebläse 10 in Gang gesetzt. Das durch das Gebläse 10 komprimierte Fluid, vorzugsweise ebenfalls Helium, wird in einem Sammelraum 11 geleitet, von dem aus durch entsprechende Ventile 12 absperrbare Leitungen 13 ausgehen. Bei Öffnung eines der Ventile 12 fließt ein Gasstrom durch die Leitung 13 und weiter durch den Ringraum zwischen zwei Leitungen 14, 15 und nach Umkehrung der Strömungsrichtung am unteren Ende desselben durch das Innere der Leitung 14 wieder zurück. Dabei werden nacheinander die Absorberkugeln 8 mitgerissen. Am unteren Ende der Kanäle 6 ist je ein Kugel « verweniger » 16 angebracht, der über eine Nebenleitung 17 die sich am unteren Ende der Kanäle 6 stauenden Absorberkugeln 8 dosiert in die (innere) Leitung 14 eingespeist. Die Leitung 14 endet oben in einem Zyklonabscheider 18, in dem die mitgerissenen Absorberkugeln 8 aus dem Gasstrom heraus zurück in die Vorratsbehälter 7 fallen. Das zur Förderung der Absorberkugeln verwendete Gas wird über einen Filter 18 zur Zurückhaltung des von den Absorberkugeln herrührenden Abriebs in das Innere des Druckbehälters 3 entlassen.

Die Leistung des Gebläses 10 ist so bemessen, daß der im Sammelraum 11 anstehende Druck nur ausreicht, um in einem der Ringräume zwischen den Rohren 14, 15 eine Fluidströmung hervorzurufen, die in der Lage ist, Absorberkugeln 8 zurück in den Vorratsbehälter 7 zu fördern. Bei versehentlich gleichzeitiger Öffnung zweier oder mehrerer Ventile 12 verteilt sich der Gasstrom auf soviele Rohrleitungen, daß die Strömungsgeschwindigkeit so stark herabgesetzt wird, daß keine Absorberkugeln mehr hochgefördert werden können. Es wird so sicher vermieden, daß versehentlich mehrere der Kanäle 6 gleichzeitig geleert werden, wodurch die neutronenphysikalischen Verhältnisse in der Spaltzone 1 ungünstig beeinflußt werden könnten. Um eine gleichmäßigere neutronenphysikalische Wirkung der Absorberkugeln 8 auf die Spaltzone 1 zu erreichen, kann es vorteilhaft sein, jeden der Kanäle 6 in mehrere eng benachbarte Teilkanäle aufzuspalten (im Extremfall bis zum Zusammenfließen desselben in einem den Reflektor 12 in zwei konzentrische Teile trennenden, umlaufenden Ringspalt), die aus jeweils einem einzigen Vorratsbehälter 7 gefüllt werden und die auch nur über jeweils eine gemeinsame Leitung 14 gleichzeitig wieder entleert werden.

**Patentansprüche**

1. Einrichtung zum Abschalten eines Hochtemperatur-Kernreaktors (1) mittels neutronenabsorbierenden Materials (8), das in im Reflektor (2) angelegte Kanäle (6) einbringbar ist, gekennzeichnet durch folgende Merkmale :

a) Das neutronenabsorbierende Material hat die Gestalt rieselfähiger Körper (8), die in oberhalb der Spaltzone (1) angeordneten Vorratsbehältern (7) speicherbar sind.

b) Es ist eine Einrichtung (10) zum Herstellen einer von unten nach oben gerichteten Fluidströmung in wahlweise einer von mehreren, das untere Ende der Kanäle (6) mit den Vorratsbehältern (7) verbindenden Leitungen (14) vorhanden.

c) Die Fluidströmung weist eine Geschwindigkeit auf, die ausreicht, um die neutronenabsorbierenden Körper (8) aus nur einem Kanal (6) heraus in einem Vorratsbehälter (7) zu fördern.

2. Einrichtung nach Anspruch 1, gekennzeichnet durch folgende Merkmale :

a) Die Leitungen (14) verbinden jeweils mehrere zusammen einen Kanal (6) bildende Teilkanäle mit je einem Vorratsbehälter (7).

**Claims**

1. Apparatus for shutting down a high temperature nuclear reactor (1) by means of neutron-absorbing material (8) which can be introduced into channels (6) provided in the reflector (2), characterised by the following features :

a) The neutron-absorbing material is in the form of friable bodies (8) which can be stored in feed containers (7) arranged above the reactor core (1) ;

b) a device (10) is provided for the production of an upwardly directed fluid stream in a selected one of a plurality of lines (14) which connect the lower end of the channels (6) to the feed containers (7) ;

c) the speed of the fluid stream is sufficient to convey the neutron-absorbing bodies (8) from one channel (6) only into a feed container (7).

2. Apparatus as claimed in Claim 1, characterised by the following feature :

a) the lines (14) each connect a plurality of subchannels which together form a channel (6), to a feed container (7).

**Revendications**

1. Dispositif pour arrêter un réacteur nucléaire à haute température (1) au moyen d'un matériau (8) absorbant des neutrons, qui peut être introduit dans des canaux (6) ménagés dans le réflecteur (2) remarquable par les caractéristiques suivantes :

a) le matériau absorbant des neutrons a la forme de corps (8) susceptibles de s'écouler, qui peuvent être stockés dans des réservoirs (7) disposés au-dessus de la zone de fission,

b) il est prévu un dispositif (10) de production d'un courant de fluide dirigé du bas vers le haut au choix dans l'un des nombreux conduits (14) mettant l'extrémité inférieure des canaux (6) en communication avec les réservoirs (7),

c) le courant de fluide présente une vitesse qui suffit à transporter les corps (8) absorbant des neutrons d'un canal (6) seulement à un réservoir (7).

2. Dispositif suivant la revendication 1, remarquable par les caractéristiques suivantes :

a) chacun des conduits (14) met plusieurs canaux partiels formant ensemble un canal (6) en communication respectivement avec un réservoir (7).